# EUROPÄISCHE PATENTSCHRIFT

(11) **EP 3 369 530 B1**
(45) Veröffentlichungstag und Bekanntmachung des Hinweises auf die Patenterteilung: **01.09.2021**
(21) Anmeldenummer: 18159690.9
(22) Anmeldetag: 02.03.2018
(51) Int. Cl.: B25F 5/00

(54) **ELEKTRISCHES ARBEITSGERÄT MIT VIBRATIONSENTKOPPLUNG**
ELECTRICAL TOOL WITH VIBRATION DECOUPLING
APPAREIL DE TRAVAIL ÉLECTRIQUE À DÉCOUPLAGE DE VIBRATIONS

(30) Priorität: 04.03.2017 DE 102017002094
(43) Veröffentlichungstag der Anmeldung: 05.09.2018
(73) Patentinhaber: Andreas Stihl AG & Co. KG, 71336 Waiblingen (DE)
(72) Erfinder: Hoche, Florian, 74354 Besigheim (DE); Menzel, Johannes, 73249 Wernau (DE); Schmid, Marc, 71570 Oppenweiler (DE)
(74) Vertreter: Wasmuth, Rolf

(56) Entgegenhaltungen:
- EP-A1- 2 942 158
- DE-A1-102005 052 428
- GB-A- 2 445 238
- US-A- 5 692 574
- US-A1- 2012 171 539
- US-A1- 2014 318 821
- US-A1- 2017 008 160

## Beschreibung

Die Erfindung betrifft ein elektrisches Arbeitsgerät umfassend ein Gerätegehäuse mit einem Elektromotor zum Antrieb eines Werkzeugs, wobei eine Steuereinheit zur Inbetriebnahme des Elektromotors vorgesehen ist. Das Arbeitsgerät weist ein Griffgehäuse mit mindestens einem Handgriff zum Tragen und/oder Führen des Arbeitsgerätes auf, wobei in dem Griffgehäuse ein Aufnahmeschacht mit einer Einschuböffnung für einen Akkupack ausgebildet ist, der zum Betrieb des Elektromotors dient. Der Akkupack ist in dem Aufnahmeschacht auswechselbar gehalten.

Ein elektrisches Arbeitsgerät ist aus der DE 10 2011 002 404 A1 bekannt. Dieses bekannte Arbeitsgerät umfasst eine Dämpfungseinheit, die dazu vorgesehen ist, den Akkupack schwingungsgedämpft zu lagern. Wird der Akkupack an einem Ende durch ein erstes Dämpfungselement und - jenseits einer Kontaktleiste - am anderen Ende mit einem zweiten Dämpfungselement gelagert, so können zwischen der Kontaktleiste und dem Akkupack Relativbewegungen auftreten, welche zu einem erhöhten mechanischen Verschleiß der Kontakte oder zu deren Bruch führen können.

Aus der EP 2 942 158 A1 ist ein Arbeitsgerät mit einem hinteren Handgriff bekannt, der über eine Dämpfungseinheit mit dem Gehäuse des Arbeitsgerätes verbunden ist. Ein Akkupack ist in das Gehäuse des Arbeitsgerätes eingeschoben und liegt damit auf der vibrationsbelasteten Seite des Arbeitsgerätes. Zwischen der Kontaktleiste und dem Akkupack können nachteilige Relativbewegungen auftreten.

Aus der US 2014/0318821 A1 ist ein akkubetriebenes Arbeitsgerät bekannt, bei dem der Akkupack am schwingungsentkoppelten Handgriff festgelegt ist. Die weiteren Druckschriften GB 2 445 238 A, US 2017/0008160 A1, US 4,692,574 A und DE 10 2005 052 428 A1 zeigen elektrische Arbeitsgeräte mit verschiedenen Maßnahmen zur Vibrationsentkopplung des hinteren Handgriffs.

Die bekannten Arbeitsgeräte zeigen auch, dass bei Verwendung eines vorderen Handgriffs dieser ohne weitere Dämpfungsmaßnahmen auf der vibrationsbelasteten Seite des Arbeitsgerätes montiert ist. Dies führt zu einer Vibrationsbelastung bei dem das Arbeitsgerät haltenden Benutzer.

Der Erfindung liegt die Aufgabe zugrunde, ein elektrisches Arbeitsgerät derart weiterzubilden, dass eine Vibrationsbelastung des das Arbeitsgerät führenden Benutzer reduziert sowie eine Relativbewegung zwischen dem Akkupack und seiner zugeordneten Kontaktleiste vermieden ist.

Zur Vibrationsentkopplung wird das Griffgehäuse zusammen mit dem Aufnahmeschacht für den Akkupack über zumindest ein und dasselbe Antivibrationselement von dem Gerätegehäuse entkoppelt. Hierzu ist zwischen dem Gerätegehäuse und dem Griffgehäuse ein Schwingspalt ausgebildet, wobei das Antivibrationselement den Schwingspalt zwischen dem Griffgehäuse und dem Gerätegehäuse zumindest partiell überbrückt. Der Schwingspalt definiert einen vorgegebenen Abstand zwischen dem Griffgehäuse und dem Gerätegehäuse, so dass sich Griffgehäuse und Gerätegehäuse relativ zueinander bewegen können. Der Schwingspalt muss nicht vollständig durch das Antivibrationselement ausgefüllt sein; an zumindest einer Stelle muss das Antivibrationselement lediglich den Abstand des Schwingspaltes überbrücken.

Da der Aufnahmeschacht für den Akkupack in dem Griffgehäuse ausgebildet ist und zusammen mit diesem über das Antivibrationselement vibrationsentkoppelt ist, ist ein in den Aufnahmeschacht eingeschobener Akkupack ebenfalls vibrationsentkoppelt. Mit ein und demselben im Schwingspalt angeordneten Antivibrationselement kann einerseits der Handgriff für den Benutzer und andererseits der Akkupack innerhalb des Griffgehäuses vibrationsentkoppelt werden. Hierbei ist erfindungsgemäß vorgesehen, das Griffgehäuse mit zwei Handgriffen auszubilden. Das Griffgehäuse umfasst einen zum Werkzeug distalen hinteren Handgriff und einen zum Werkzeug proximalen vorderen Handgriff. Durch diese Anordnung von Handgriffen am Griffgehäuse ist ein leichtes Führen und/oder Tragen des Arbeitsgerätes gewährleistet. Zur Schwingungsentkopplung ist nur zumindest ein im Schwingspalt angeordnetes Antivibrationselement notwendig.

Sind an mehreren Stellen im Schwingspalt Antivibrationselemente angeordnet, so stellt dies eine Parallelschaltung von Antivibrationselementen im Schwingspalt dar. Eine Anordnung von zusätzlichen Antivibrationselementen jenseits des Schwingspaltes, beispielsweise zwischen Aufnahmeschacht und Griffgehäuse und/oder zwischen Akkupack und Aufnahmeschacht, stellt eine Reihenschaltung von Antivibrationselementen dar. Erfindungsgemäß ist zumindest ein Antivibrationselement vorgesehen, das sowohl den Akkupack als auch das Griffgehäuse und den Akkupack sowie den hinteren Handgriff als auch den vorderen Handgriff von den Schwingungen des Gerätegehäuses entkoppelt.

Es können auch weitere, in Reihe geschalte Antivibrationselemente jenseits des Schwingspalts vorgesehen sein, die zusätzlich zu dem im Schwingspalt angeordneten Antivibrationselement wirken.

Zweckmäßig sind zusätzlich zu dem mindestens einem im Schwingspalt angeordneten Antivibrationselement keine weiteren Antivibrationselemente zwischen Gerätegehäuse und Akkupack und/oder zwischen dem Gerätegehäuse und dem Griffgehäuse in Reihe geschaltet. Insbesondere sind keine weiteren Antivibrationselemente zwischen Akkupack und Aufnahmeschacht vorgesehen.

Aufgrund der erfindungsgemäßen Gestaltung kann der Akkupack im Aufnahmeschacht starr gehalten werden, wodurch Relativbewegungen zwischen dem Akkupack, seinen Kontakten und einer dem Akkupack zugeordneten Kontaktleiste sicher vermieden sind. Im Betrieb werden weder zwischen dem Akkupack und dem Aufnahmeschacht noch zwischen dem Griffgehäuse und der Kontaktleiste im Aufnahmeschacht Relativbewegungen auftreten. Insbesondere treten im Betrieb zwischen dem Griffgehäuse und den Kontakten des Akkupacks keine Relativbewegungen auf. Der Akkupack bildet zusammen mit dem Griffgehäuse ein gemeinsames Massesystem, welches relativ zu dem Gerätegehäuse schwingen kann. Das Gerätegehäuse ist von dem Griffgehäuse vibrationsentkoppelt.

Vorteilhaft bilden der Aufnahmeschacht und zumindest ein Handgriff ein gemeinsames, miteinander fest verbundenes Griffgehäuse. Nach der Erfindung erfolgt die Vibrationsentkopplung des Akkupacks über das Antivibrationselement des Handgriffs.

Eine zweckmäßige Anordnung ergibt sich, wenn die Längsmittelachse des Aufnahmeschachts in einem Winkel zu einer Längsachse des Arbeitsgerätes liegt. Vorteilhaft beträgt dieser Winkel 70 bis 110°. Insbesondere liegt die Längsmittelachse des Aufnahmeschachtes rechtwinklig zur Längsachse.

Es kann auch zweckmäßig sein, die Längsmittelachse des Aufnahmeschachtes parallel zur oder in Richtung der Längsachse des Arbeitsgerätes anzuordnen. Eine derartige Konstruktion ist für ein Arbeitsgerät mit einem Führungsrohr zwischen Gerätegehäuse und Griffgehäuse vorteilhaft.

Vorteilhaft wird die auswechselbare Anordnung des Akkupacks im Aufnahmeschacht durch eine lösbare Rastverriegelung gebildet.

Als Antivibrationselement hat sich ein elastischer Materialblock als vorteilhaft erwiesen. Ein Antivibrationselement kann insbesondere rotationssymmetrisch ausgebildet sein. Das rotationssymmetrische Antivibrationselement überbrückt den Abstand der den Schwingspalt begrenzenden Flächen und füllt ansonsten den Schwingspalt nicht in Breite und Länge vollständig aus. Das Antivibrationselement ist bevorzugt im Schwingspalt auf einer kleineren Fläche wirksam, wirkt somit im weitesten Sinne punktuell. Vorteilhaft wird das Antivibrationselement als Feder ausgeführt. Insbesondere ist eine Ausbildung als Stahlfeder vorteilhaft.

In Weiterbildung der Erfindung weist das Arbeitsgerät ein vorderes Ende und ein hinteres Ende auf, wobei das Werkzeug am vorderen Ende angeordnet ist und die Einschuböffnung des Aufnahmeschachtes zu dem hinteren Ende des Arbeitsgerätes liegend offen ist.

In vorteilhafter Weiterbildung der Erfindung wird dem Elektromotor über elektrische Leitungen Energie zugeführt, wobei die elektrischen Leitungen insbesondere als Einzelleitungen verlegt sind. Die Einzelleitungen liegen mit einem Abstand zueinander und überbrücken den Schwingspalt an unterschiedlichen Stellen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind.

Die zu einem Ausführungsbeispiel angegebenen Merkmale und Vorteile sind auch auf andere Ausführungsbeispiele zu übertragen. Die einzelnen Merkmale und Vorteile eines Ausführungsbeispiels sind auch mit anderen Ausführungsbeispielen kombinierbar. Es zeigen:
- Fig. 1: in schematischer Darstellung ein elektrisches Arbeitsgerät nach dem Prinzip einer Heckenschere,
- Fig. 2: in schematischer Darstellung ein nicht erfindungsgemäßes elektrisches Arbeitsgerät nach dem Prinzip eines Freischneiders,
- Fig. 3: in schematischer Darstellung ein nicht erfindungsgemäßes Arbeitsgerät gemäß Fig. 2 in einer veränderten Anordnung des Akkupacks,
- Fig. 4: in schematischer Darstellung ein nicht erfindungsgemäßes Arbeitsgerät nach Fig. 3 mit als Schraubenfedern ausgebildeten Antivibrationselementen,
- Fig. 5: eine schematische Darstellung eines Antivibrationselementes in Form einer als Schraubenfeder ausgeführten Stahlfeder mit einem Stopfen zur Montage,
- Fig. 6: eine perspektivische, schematische Darstellung des Stopfens nach Fig. 5,
- Fig. 7: eine Draufsicht auf den Stopfen nach Fig. 6,
- Fig. 8: eine Seitenansicht des Stopfens nach Fig. 6,
- Fig. 9: einen Schnitt längs der Linie XI-XI in Fig. 8.

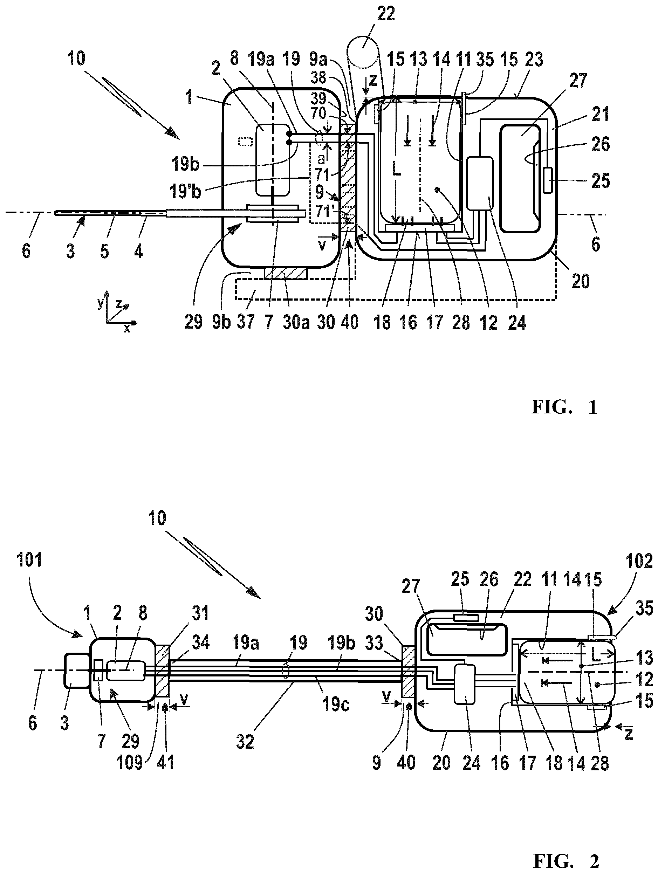

Das in Fig. 1 schematisch dargestellte elektrische Arbeitsgerät 10 umfasst ein Gerätegehäuse 1 mit einem Elektromotor 2 zum Antrieb eines Werkzeugs 3.

Das Arbeitsgerät 10 ist im Ausführungsbeispiel nach Figur 1 als Heckenschere mit einem Werkzeug 3 aus relativ zueinander hin und her gehenden Messerbalken 4, 5 ausgebildet. Das Antriebselement 7 zum Antrieb des Werkzeuges 3 ist als Exzenter oder Kurbeltrieb ausgebildet. In der Antriebsverbindung zwischen dem das Werkzeug 3 antreibenden Antriebselement und dem Elektromotor 2 können ein Getriebe und/oder eine Kupplung angeordnet sein. Das schematisch dargestellte Arbeitsgerät 10 steht exemplarisch als Ausführungsbeispiel für ein kompaktes Arbeitsgerät ohne Führungsrohr wie z. B. eine Motorsäge, ein Trennschleifer oder die schematisch dargestellte Heckenschere.

Das Arbeitsgerät 10 besitzt eine Längsachse 6, die in einer durch das Werkzeug 3 definierten Werkzeugebene liegt und in Richtung der größten Ausdehnung des Arbeitsgerätes 10 verläuft. Die Drehachse 8 des Elektromotors 2 liegt senkrecht bzw. rechtwinklig zur Längsachse 6 des Arbeitsgerätes 10. Die Drehachse 8 des Elektromotors 2 liegt insbesondere senkrecht zur Werkzeugebene.

Das elektrische Arbeitsgerät 10 weist ein Griffgehäuse 20 auf, an welchem erfindungsgemäß zwei Handgriffe (21, 22) vorgesehen sind. Die Handgriffe 21, 22 dienen dem Führen und/oder dem Tragen des Arbeitsgerätes 10. Das Griffgehäuse 20 weist einen zum Werkzeug 3 distalen hinteren Handgriff 21 und einen zum Werkzeug 3 proximalen vorderen Handgriff 22 auf.

Im Griffgehäuse 20 ist ein Aufnahmeschacht 11 für einen Akkupack 12 ausgebildet, der zum Betrieb des Elektromotors 2 vorgesehen ist. Der Aufnahmeschacht 11 hat auf einer Seitenfläche 23 des Griffgehäuses 20 eine Einschuböffnung 13, über die der Akkupack 12 in Pfeilrichtung 14 in den Aufnahmeschacht 11 eingeschoben wird. Der Akkupack 12 ist im Wesentlichen über seine gesamte Länge L im Aufnahmeschacht 11 aufgenommen; es kann zweckmäßig sein, wenn der Akkupack um ein Maß z aus der Einschuböffnung 13 vorsteht. Das vorstehende Ende des Akkupacks 12 steht über die Seitenfläche 23 des Griffgehäuses 20 vor.

Der Akkupack 12 ist in dem Aufnahmeschacht 11 auswechselbar gehalten und wird in seiner in Fig. 1 gezeigten Betriebsstellung über eine Rastverriegelung 15 verrastet gehalten. Die Rastverriegelung 15 weist eine Entriegelungstaste 35 auf, bei deren Niederdrücken die Rastelemente der Rastverriegelung 15 den Akkupack 12 freigeben, so dass dieser entgegen Pfeilrichtung 14 aus dem Aufnahmeschacht 11 entnommen werden kann.

Am Boden 16 des Aufnahmeschachtes 11 ist eine Kontaktleiste 17 angeordnet, die mit Kontakten 18 des Akkupacks 12 elektrisch in Verbindung tritt. Es kann auch vorteilhaft sein, die Kontaktleiste 18 am Umfang des Aufnahmeschachtes 11 vorzusehen. Über die Kontaktleiste 17 und eine Steuereinheit 24 ist über elektrische Leitungen 19a, 19b der Elektromotor 2 angeschlossen. Die Steuereinheit 24 befindet sich vorteilhaft im Griffgehäuse 20 und ist über den Schwingspalt 9 von den Vibrationen des Gerätegehäuses 20 entkoppelt. Es kann zweckmäßig sein, die elektrischen Leitungen 19a, 19b als gemeinsames Leitungskabel 19 zu verlegen. Bevorzugt sind die elektrischen Leitungen 19a, 19b jeweils als einzelne Leitung verlegt, insbesondere überbrücken die einzelnen elektrischen Leitungen 19a, 19b den Schwingspalt 9 an unterschiedlichen Stellen 70, 71. Durch die Verlegung der einzelnen Leitungen 19a, 19b an unterschiedlichen Stellen 70, 71 des Schwingspaltes 9 liegen die einzelnen Leitungen 19a, 19b mit Abstand a zueinander. Die elektrischen Leitungen 19a, 19b können sich nicht gegeneinander abstützen, wodurch das Gesamtsystem weicher wird. Es werden weniger Schwingungen übertragen.

Da die Leitungen 19a, 19b an verschiedenen Stellen 70, 71 über den Schwingspalt 9 geführt werden, kann die Steifigkeit einer einzelnen Leitung 19a, 19b auf verschiedene Schwingungsformen z. B. bei unterschiedlichen Drehzahlen verteilt werden kann.

Es kann vorteilhaft sein, den Abstand a sehr groß zu wählen, wie die strichliert dargestellte Leitung 19'b zeigt, die den Schwingspalt 9 an der Stelle 71' kreuzt.

Der Steuereinheit 24 ist ein elektrisches Bedienelement 25 zugeordnet, welches als elektrischer Schalter, Potentiometer, Sensor oder dergleichen ausgebildet sein kann. Das elektrische Bedienelement 25 ist im Ausführungsbeispiel von einem mechanischen Taster 26 zu betätigen, der in eine Grifföffnung 27 des Handgriffs 21 einragt.

Griffgehäuse 20 und Gerätegehäuse 1 sind einander jeweils mit einer Fläche 38, 39 zugewandt, wobei beide Flächen38, 39 einander nicht kontaktieren. Die Flächen 38, 39 begrenzen einen Schwingspalt 9 mit einer Höhe, einer Länge und einer Breite.

Die Höhe des Schwingspaltes 9 bezeichnet den Abstand zwischen den Flächen 38, 39. Die Länge und Breite des Schwingspaltes 9 bezeichnen gemeinsam den Flächeninhalt der einander zugewandten beabstandeten Flächen 38 und 39. Der Schwingspalt 9 besitzt mindestens zwei Schwingspaltabschnitte 9a, 9b, bei denen die Höhe in unterschiedlichen Richtungen gemessen wird, d. h. der Schwingspalt 9 erstreckt sich dreidimensional. Der Schwingspalt 9 liegt nicht in einer einzigen Ebene, sondern erstreckt sich zumindest entlang zweier unterschiedlicher, winklig zueinander angeordneter Ebenen. So kann das Griffgehäuse 20 einen Ausleger 37 bis unter das Gerätegehäuse 1 aufweisen, wobei in dem Schwingspaltabschnitt 9b zwischen Ausleger 37 und Gerätegehäuse 1 ein weiteres Antivibrationselement 30a angeordnet sein kann. Die Schwingspaltabschnitte 9a, 9b sind im Verlauf schematisch dargestellt; die Schwingspaltabschnitte 9a, 9b stehen beispielhaft in der schematisch dargestellten Lage rechtwinklig aufeinander.

Das Gerätegehäuse 1 und das Griffgehäuse 20 sind über ein Antivibrationselement 30 miteinander verbunden. Das Antivibrationselement 30 überbrückt den zwischen dem Gerätegehäuse 1 und dem Griffgehäuse 20 ausgebildeten Schwingspalt 9. Der Schwingspalt 9 gewährleistet zwischen dem Gerätegehäuse 1 und dem Griffgehäuse 20 einen Abstand v. Durch diesen Abstand v des Schwingspaltes 9 kann sich das Gerätegehäuse 1 relativ zum Griffgehäuse 20 bewegen und schwingen, ohne dass es in mechanischen Kontakt mit dem Griffgehäuse 20 gelangt. Die elektrischen Leitungen 19a, 19b sind als Einzelleitungen oder als gemeinsames Leitungskabel 19 zum Elektromotor 2 im Gerätegehäuse 1 geführt und überbrücken den Schwingspalt 9.

Im Betrieb wird das Gerätegehäuse 1 zu Schwingungen angeregt. Die Schwingungsanregung erfolgt insbesondere über das mit dem Schnittgut wechselwirkende Werkzeug 3 und überträgt sich auf das Gerätegehäuse1. Es können auch Resonanzen im Antriebsstrang zu einer Schwingungsanregung des Gerätegehäuses 1 führen.

Ein und dasselbe Antivibrationselement 30 entkoppelt somit das Griffgehäuse 20 von den Vibrationen des Gerätegehäuses 1, wobei zugleich eine Vibrationsentkopplung des Akkupacks 12 von dem im Gerätegehäuse 1 angeordneten Antrieb 29 erzielt ist. Das Griffgehäuse 20 ist zusammen mit dem Aufnahmeschacht 11 - und einem darin angeordneten Akkupack 12 - über ein und dasselbe Antivibrationselement 30 von dem Gerätegehäuse 1 und dem darin angeordneten Antrieb 29 entkoppelt. Der Schwingspalt 9 zwischen dem Griffgehäuse 20 und dem Gerätegehäuse 1 wird von dem Antivibrationselement 30 überbrückt. Das Antivibrationselement 30 überbrückt mit seiner Länge die Höhe des Schwingspaltes 9, also den Abstand v zwischen dem Gerätegehäuse 1 und dem Griffgehäuse 20. Die Breite des Antivibrationselementes 30 ist insbesondere um ein Vielfaches kleiner als die Länge und/oder Breite des Schwingspaltes 9. In bevorzugter Ausführungsform wird der Schwingspalt 9 lediglich punktuell durch Antivibrationselemente 30 überbrückt. Die punktuelle Überbrückung des Schwingspalts 9 ist vorteilhaft für eine wirksame Entkopplung. Eine flächige Verbindung der den Schwingspalt begrenzenden Elemente führt zu einer zu steifen Verbindung. Bei Anordnung mehrerer Antivibrationselemente 30 im Schwingspalt 9 verbleiben nicht überbrückte Bereiche des Schwingspaltes 9.

Das Antivibrationselement 30 ist vorzugsweise rotationssymmetrisch ausgebildet. Das Antivibrationselement 30 ist lokal im Schwingspalt 9 angeordnet und erstreckt sich insbesondere entlang des Schwingspalts 9 nicht über den gesamten Schwingspalt 9. Das angeordnete Antivibrationselement 30 ist über den gesamten Schwingspalt 9 wirksam.

Der Akkupack 12 ist im Aufnahmeschacht 11 starr gehalten, insbesondere durch die Rastverriegelung 15 verrastet gehalten. Weder die Verrastung noch die Kontaktierung über die Kontakte 18 und die Kontaktleiste 17 sind durch Vibrationen belastet; im Betrieb des Arbeitsgerätes 10 treten zwischen dem Akkupack 12 und dem Aufnahmeschacht 11 keine Relativbewegungen auf.

Die Kontaktleiste 17 ist starr im Aufnahmeschacht 11, insbesondere am Boden 16 des Aufnahmeschachtes 11, angeordnet, so dass im Betrieb des Arbeitsgerätes 10 zwischen dem Griffgehäuse 20 und der Kontaktleiste 17 im Aufnahmeschacht 11 keine Relativbewegungen auftreten. Dadurch ist auch gewährleistet, dass im Betrieb des elektrischen Arbeitsgerätes 10 zwischen dem Griffgehäuse 20 und den Kontakten 18 des Akkupacks 12 keine Relativbewegungen auftreten. Die Kontakte 18 sind nicht durch Vibrationen mechanisch belastet.

Der im Aufnahmeschacht 11 eingeschobene Akkupack 12 bildet zusammen mit dem Griffgehäuse 20 ein gemeinsames Massesystem, gegenüber dem das Gerätegehäuse 1 frei schwingen kann. Die Vibrationsentkopplung des Akkupacks 12 im Griffgehäuse 20 erfolgt über das Antivibrationselement 30 des Griffgehäuses 20 selbst bzw. der Handgriffe 21 und 22. Der Aufnahmeschacht 11 bildet zusammen mit zumindest einem Handgriff 21 ein gemeinsames, fest, insbesondere starr verbundenes Griffgehäuse 20.

Die Ausbildung ist so getroffen, dass zwischen dem Griffgehäuse 20 und den Kontakten 18 des Akkupacks 12 keine zusätzlichen Antivibrationselemente angeordnet sind. Es sind keine zusätzlichen Antivibrationselemente zwischen dem Gehäuse des Akkupacks 12 und der Wandung des Aufnahmeschachtes 11 vorgesehen. Der Akkupack 12 ist starr im Aufnahmegehäuse 11 gehalten und bildet zusammen mit dem Griffgehäuse 20 und zumindest einem Handgriff 21 eine gemeinsame Struktur.

Das im Ausführungsbeispiel nach Fig. 1 mit zwei Handgriffen 21 und 22 ausgebildete Griffgehäuse 20 ist derart gestaltet, dass der hintere Handgriff 21 einen größeren Abstand zum Werkzeug 3 aufweist als der vordere Handgriff 22. Der hintere Handgriff 21 bildet einen zum Werkzeug 3 distalen hinteren Handgriff, während der Handgriff 22 einen zum Werkzeug 3 proximalen vorderen Handgriff bildet.

Die Einschuböffnung 13 des Aufnahmeschachtes 11 liegt im Ausführungsbeispiel nach Fig. 1 dem vorderen, oberen Handgriff 21 zugewandt. Das Arbeitsgerät 10 hat eine in seiner Abstellposition vertikale Längsmittelebene, welche durch den hinteren Handgriff 21 bestimmt ist. Die Einschubrichtung des Akkupacks 12 liegt parallel zur Längsmittelebene des Arbeitsgerätes 10 und insbesondere rechtwinklig zur Längsmittelachse 6.

Das in Fig. 2 dargestellte nicht erfindungsgemäße elektrische Arbeitsgerät 10 weist einen ähnlichen Grundaufbau auf wie das Arbeitsgerät 10 nach Fig. 1; gleiche Teile sind mit gleichen Bezugszeichen versehen.

Das Arbeitsgerät 10 ist nach dem Prinzip eines Freischneiders, eines Hochentasters, eines Heckenschneiders oder dgl. Arbeitsgerät 10 aufgebaut und weist ein Führungsrohr 32 auf. Das Führungsrohr 32 ist zwischen dem Gerätegehäuse 1 und dem Griffgehäuse 20 angeordnet, so dass das Arbeitsgerät 10 ein vorderes Ende 101 und ein hinteres Ende 102 aufweist. Das Werkzeug 3 ist am vorderen Ende 101 angeordnet. Am vorderen Ende 101 ist das Gerätegehäuse 1 mit dem Antrieb 29 aus einem Elektromotor 2 und einem Antriebselment7 für das Werkzeug 3 vorgesehen.

In der Antriebsverbindung zwischen dem Werkzeug 3 und Elektromotor 2 können eine Kupplung und/oder ein Getriebe angeordnet sein.

Das Griffgehäuse 20 weist im nicht erfindungsgemäßen Ausführungsbeispiel nach Fig. 2 einen am Griffgehäuse 20 ausgebildeten Handgriff 22 mit einem Taster 26, einem Sensor oder dergleichen Element auf, der ein elektrisches Bedienelement 25 betätigt. Das Arbeitsgerät 10 weist eine Längsmittelebene auf, in der das Führungsrohr 32 und die Drehachse 8 des Elektromotors 2 liegen. Der Aufnahmeschacht 11 für den Akkupack 12 weist eine Längsmittelachse 28 auf, die in der Längsmittelebene des Arbeitsgerätes 10 liegt. Die Längsmittelachse 28 schließt mit dem Führungsrohr 32 einen Winkel von weniger als 10° ein; insbesondere verläuft die Längsmittelachse 28 parallel zum Führungsrohr 32. Der Einschub des Akkupacks 12 erfolgt entlang der Längsmittelachse 28 des Aufnahmeschachts 11, wobei die Einschuböffnung 13 im Ausführungsbeispiel nach Figur 2 am hinteren Ende 102 des Arbeitsgerätes 10 an einer im Betrieb üblicherweise nach hinten zeigenden Seite angeordnet ist.

Das Griffgehäuse 20 und das Gerätegehäuse 1 sind über das Führungsrohr 32 und mindestens ein Antivibrationselement 30, 31 miteinander verbunden. Ein zumindest zwischen einem Ende 33 des Führungsrohres 32 und dem Griffgehäuse 20 bzw. dem Gerätegehäuse 1 und dem Ende 34 des Führungsrohres 32 ausgebildeter Schwingspalt 9, 109 wird durch das mindestens eine Antivibrationselement 30, 31 überbrückt. Der Schwingspalt 9, 109 kann sich axial und/oder radial am Führungsrohr 32 erstrecken.

Die Ansteuerung des Elektromotors 2 im Gerätegehäuse 1 erfolgt über die im Griffgehäuse 20 angeordnete Steuereinheit 24, die einerseits über die Kontaktleiste 17 mit den Kontakten 18 des Akkupacks 12 in Verbindung steht und andererseits mit dem elektrischen Bedienelement 25, welches über den Taster 26 vom Benutzer zu bedienen ist. Das Leitungskabel 19 zum Elektromotor 2 im Gerätegehäuse 1 verläuft durch das Führungsrohr 32 vom Griffgehäuse 20 zum Gerätegehäuse 1. Das elektrische Leitungskabel 19 überbrückt den mindestens einen Schwingspalt 9, 109.

Das Leitungskabel 19 in Fig. 2 umfasst drei einzelne elektrische Leitungen19a, 19b und 19c, wie sie vorzugsweise zur Ansteuerung eines elektronisch kommutierten Elektromotors 2 (EC-Motor) vorgesehen sein können. Es kann zweckmäßig sein, die elektrischen Leitungen 19a, 19b, und 19c als gemeinsames Leitungskabel 19 zu verlegen, wie strichliert in Fig. 2 gezeigt. Bevorzugt sind die elektrischen Leitungen 19a, 19b, 19c jeweils als einzelne Leitung verlegt. Die einzelnen Leitungen 19a, 19b, und 19c überbrücken den Schwingspalt 9 vorzugsweise an unterschiedlichen Stellen. Durch die Verlegung der einzelnen Leitungen 19a, 19b, 19c an unterschiedlichen Stellen des Schwingspaltes 9 liegen die einzelnen Leitungen 19a, 19b, 19c mit Abstand zueinander. Die elektrischen Leitungen 19a, 19b, 19c können sich so nicht gegeneinander abstützen, wodurch das Gesamtsystem weicher wird. Es werden weniger Schwingungen übertragen.

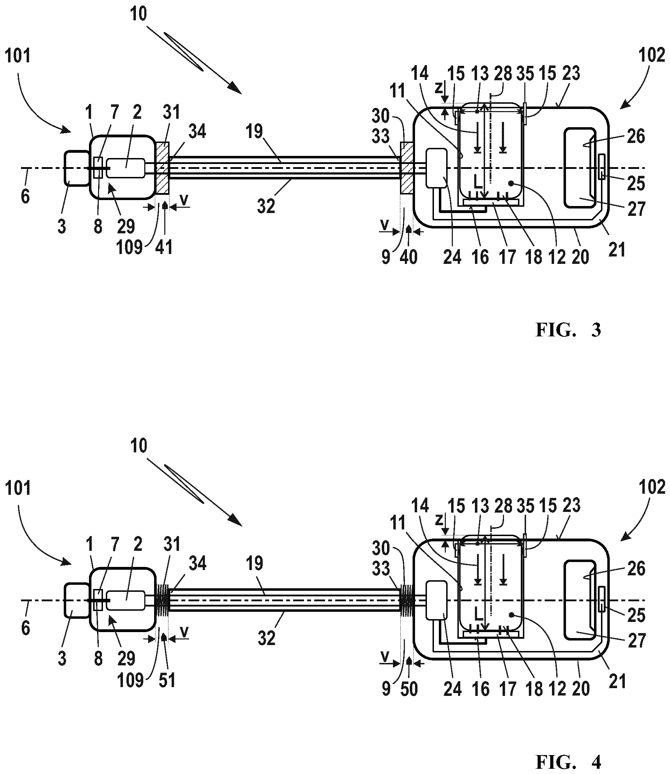

Das nicht erfindungsgemäße Ausführungsbeispiel nach Fig. 3 entspricht im Grunde dem nach Fig. 2, weshalb für gleiche Teile gleiche Bezugszeichen verwendet sind.

Im nicht erfindungsgemäßen Ausführungsbeispiel nach Fig. 3 ist ein Handgriff 21 hinter dem Aufnahmeschacht 11 für den Akkupack 12 angeordnet, während im Ausführungsbeispiel nach Figur 2 der Aufnahmeschacht das hintere Ende 102 des Arbeitsgerätes 10 bildet.

Der Aufnahmeschacht 11 für den Akkupack 12 weist eine Längsmittelachse 28 auf, die in der Längsmittelebene des Arbeitsgerätes 10 liegt und insbesondere einen Winkel zwischen 80° und 110° mit dem Führungsrohr 32 einschließt. Der Einschub des Akkupacks 12 erfolgt entlang der Längsmittelachse 28 des Aufnahmeschachtes 11, wobei die Einschuböffnung 13 im Ausführungsbeispiel nach Figur 3 zwischen dem Handgriff 21 und dem Führungsrohr 32 an einer im Betrieb üblicherweise nach oben zeigenden Gehäuseseite angeordnet ist.

Das Antivibrationselement 30, 31 kann aufgrund seines Materials und/oder seiner Gestalt elastische Eigenschaften aufweisen. Das Antivibrationselement 30, 31 kann insbesondere als Stahlfeder 50, 51 (Fig. 4) oder als Formteil 40, 41 aus Gummi oder Polyurethanschaum ausgebildet sein. Vorteilhaft bestehen die Antivibrationselemente 30, 31 aus Gummi. Gummi dämpft die Übertragung von hochfrequenten Schwingungen.

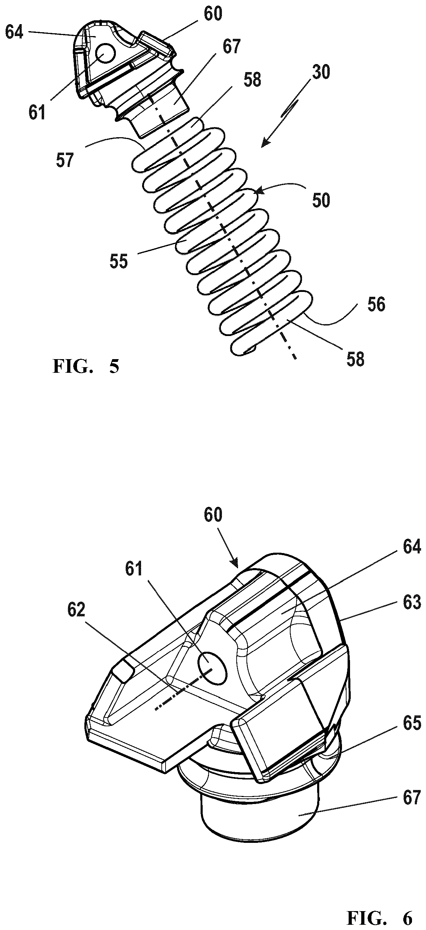

Eine beispielhafte Ausbildung eines Antivibrationselementes 30 ist in Fig. 5 gezeigt. Die dort dargestellte Stahlfeder 50 ist als Schraubenfeder 55 ausgebildet und wird über in die Enden 56, 57 der Schraubenfeder 50 eingedrehte Stopfen 60 gehalten. Ein Stopfen 60 ist zur Montage mit einer Befestigungsöffnung 61 zum Eingriff eines Befestigungselementes 62 versehen. Derartige Stopfen sind ausführlich in der Patentanmeldung DE 10 2007 048 887 A1 der Anmelderin beschrieben, auf deren Offenbarung hiermit ausdrücklich Bezug genommen wird.

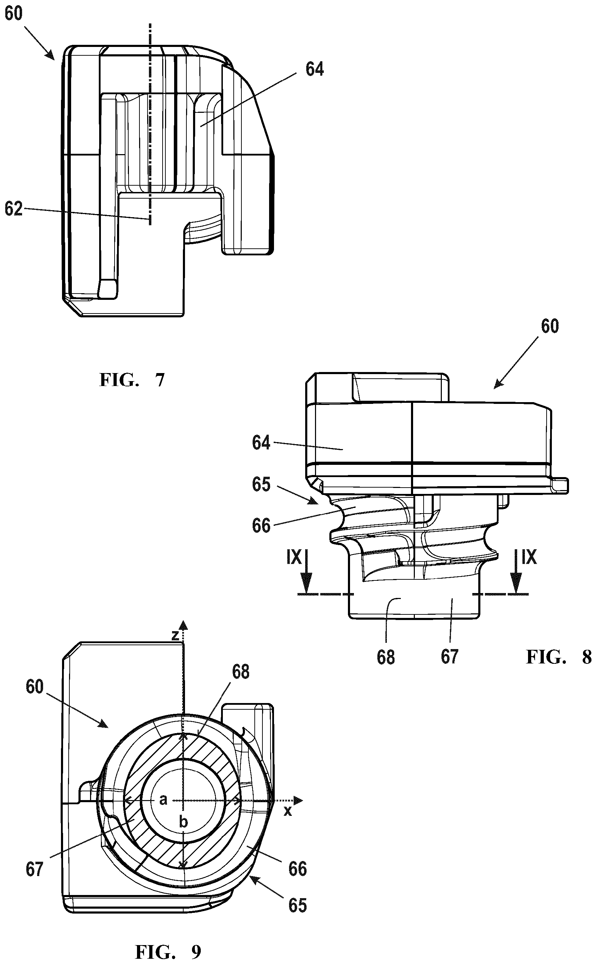

Ein Stopfen 60 zur Montage einer Schraubenfeder 55 als Antivibrationselement besteht aus einem Grundkörper 63 mit einem Kopf 64, einem axialen Dom 67 sowie einer Aufnahme 65 für zumindest eine Windung 58 der Schraubenfeder 55. Der Kopf 64, der in Fig. 7 in Draufsicht dargestellt ist, hat eine dem Befestigungsort angepasste Gestalt. Der Kopf 64 weist insbesondere eine durchgehende Befestigungsöffnung 61 auf, durch die ein Befestigungselement 62 greift.

Wie auch aus der Seitenansicht nach Fig. 8 zu ersehen, wird die Schraubenfeder 55 über etwas mehr als eine ihrer letzten Windungen 58 in einem Gewindegang 66 der Aufnahme 65 des Stopfens 60 gehalten. Der Gewindegang 66 ist an einem Ende des axialen Doms 67 des Stopfens 60 ausgebildet. Der Dom 67 des Grundkörpers 63 ragt axial in ein Ende 57 der Schraubenfeder 55 ein.

Fig. 9 zeigt einen Schnitt durch den axialen Dom 67. Wie dort gezeigt, ist der Dom 67 im Außendurchmesser elliptisch gestaltet, derart, dass der Dom 67 in eine x-Richtung eine kleinere Erstreckung hat als in eine z-Richtung. Im gezeigten Ausführungsbeispiel nach Fig. 9 liegt eine kleine Halbachse a des elliptischen Querschnitts in x-Richtung; die große Halbachse B des elliptischen Querschnitts erstreckt sich in z-Richtung.

Die äußere Mantelfläche 68 des axialen Doms 67 bildet bei Querauslenkung der Schraubenfeder 55 eine Anschlagfläche für deren Windungen.

Wird die Schraubenfeder gemäß Darstellung in Fig. 9 in x-Richtung ausgelenkt, so ist im Wesentlichen die Federsteifigkeitskennlinie der Schraubenfeder 55 wirksam. Wird hingegen die Schraubenfeder 55 in z-Richtung ausgelenkt, so wird nach einer bereits geringen Auslenkung zumindest eine Windung der Schraubenfeder 55 im Bereich der großen Halbachse b an der Mantelfläche 68 als Anschlagfläche der Auslenkung anliegen. Durch Anlegen an der Mantelfläche 68 ist eine von der ursprünglichen linearen Federsteifigkeitskennlinie der Schraubenfeder 55 abweichende Kennlinie gegeben. Die Schraubenfeder 55 liegt in z-Richtung nach nur geringer Querauslenkung an der Mantelfläche 68 an und wird dadurch nach Anlage steifer. Im Bereich der kleinen Halbachse a hat die Schraubenfeder 55 einen größeren Abstand zur Mantelfläche 68, wodurch die Federsteifigkeit ausschließlich durch die Kennlinie der Schraubenfeder 55 selbst bestimmt ist.

Durch die Gestalt und Auslegung des Außenquerschnitts des Eingriffsabschnitts 67 kann so die Schraubenfeder 55 in unterschiedlichen Richtungen der Auslenkung unterschiedlich steif ausgelegt werden.

## Patentansprüche

1. Elektrisches Arbeitsgerät mit:
einem Gerätegehäuse (1) mit einem Elektromotor (2) zum Antrieb eines Werkzeugs (3),
einer Steuereinheit (24) zur Inbetriebnahme des Elektromotors (2),
einem Griffgehäuse (20) mit mindestens einem Handgriff (21, 22) zum Führen des Arbeitsgerätes (10),
einem in dem Griffgehäuse (20) ausgebildeten Aufnahmeschacht (11) mit einer Einschuböffnung (13) für einen Akkupack (12) zum Betrieb des Elektromotors (2),
wobei der Akkupack (12) in dem Aufnahmeschacht (11) auswechselbar gehalten ist,
und zur Vibrationsentkopplung das Griffgehäuse (20) zusammen mit dem Aufnahmeschacht (11) für den Akkupack (12) über zumindest ein und
dasselbe Antivibrationselement (30) von dem Gerätegehäuse (1) entkoppelt ist,
und zwischen dem Gerätegehäuse (1) und dem Griffgehäuse (20) ein Schwingspalt (9) ausgebildet ist,
wobei das Antivibrationselement (30) den Schwingspalt (9) zwischen dem Griffgehäuse (20) und dem Gerätegehäuse (1) zumindest partiell überbrückt,
**dadurch gekennzeichnet, dass** das Griffgehäuse (20) einen zum Werkzeug (3) distalen hinteren Handgriff (21) und einen zum Werkzeug (3) proximalen vorderen Handgriff (22) aufweist.

2. Arbeitsgerät nach Anspruch 1,
**dadurch gekennzeichnet, dass** der Akkupack (12) im Aufnahmeschacht (11) starr gehalten ist.

3. Arbeitsgerät nach Anspruch 2,
**dadurch gekennzeichnet, dass** im Betrieb zwischen dem Akkupack (12) und dem Aufnahmeschacht (11) keine Relativbewegungen auftreten.

4. Arbeitsgerät nach Anspruch 2,
**dadurch gekennzeichnet, dass** im Betrieb zwischen dem Griffgehäuse (20) und der Kontaktleiste (17) im Aufnahmeschacht (11) keine Relativbewegungen auftreten.

5. Arbeitsgerät nach Anspruch 2,
**dadurch gekennzeichnet, dass** im Betrieb zwischen dem Griffgehäuse (20) und den Kontakten (18) des Akkupacks (12) keine Relativbewegungen auftreten.

6. Arbeitsgerät nach Anspruch 1,
**dadurch gekennzeichnet, dass** im Betrieb der Akkupack (12) zusammen mit dem Griffgehäuse (20) als gemeinsames Massesystem relativ zu dem Gerätegehäuse (1) schwingt.

7. Arbeitsgerät nach Anspruch 1,
**dadurch gekennzeichnet, dass** die Vibrationsentkopplung des Akkupacks (12) über das Antivibrationselement (30) des Handgriffes (21, 22) erfolgt.

8. Arbeitsgerät nach Anspruch 1,
**dadurch gekennzeichnet, dass** der Aufnahmeschacht (11) und zumindest ein Handgriff (21) ein gemeinsames, fest verbundenes Griffgehäuse (20) bilden.

9. Arbeitsgerät nach Anspruch 1,
**dadurch gekennzeichnet, dass** das Arbeitsgerät (10) eine Längsachse (6) aufweist und die Längsmittelachse (28) des Aufnahmeschachtes (11) in einem Winkel von 70° bis 110° zur Längsachse (6) liegt.

10. Arbeitsgerät nach Anspruch 1,
**dadurch gekennzeichnet, dass** das Arbeitsgerät (10) eine Längsachse (6) aufweist und die Längsmittelachse (28) des Aufnahmeschachtes (11) in der Längsachse (6) liegt.

11. Arbeitsgerät nach Anspruch 1,
**dadurch gekennzeichnet, dass** der Akkupack (12) im Aufnahmeschacht (11) über eine lösbare Rastverriegelung (15) gehalten ist.

12. Arbeitsgerät nach Anspruch 1,
**dadurch gekennzeichnet, dass** das Antivibrationselement (30) ein elastisches Formteil (40, 41) ist und den Schwingspalt (9) partiell überbrückt.

13. Arbeitsgerät nach Anspruch 1,
**dadurch gekennzeichnet, dass** das Antivibrationselement (30) eine Feder ist.

14. Arbeitsgerät nach Anspruch 1,
**dadurch gekennzeichnet, dass** das Arbeitsgerät (10) ein vorderes Ende (101) und ein hinteres Ende (102) aufweist, dass das Werkzeug (3) am vorderen Ende (101) angeordnet ist und die Einschuböffnung (13) zu dem hinteren Ende (102) des Arbeitsgerätes (10) offen ist.

15. Arbeitsgerät nach Anspruch 1,
**dadurch gekennzeichnet, dass** dem Elektromotor (2) über elektrische Leitungen (19a, 19b) Energie zugeführt ist, dass die elektrischen Leitungen (19a, 19b) als Einzelleitungen verlegt sind und dass die elektrischen Leitungen (19a, 19b) mit einem Abstand (a) zueinander den Schwingspalt (9) an unterschiedlichen Stellen (70, 71) des Schwingspaltes (9) überbrücken.

## Claims

1. Electrical work appliance comprising:
an appliance housing (1) having an electric motor (2) for driving a work tool (3),
a control unit (24) for putting the electric motor (2) into operation,
a handle housing (20) that has at least one handle (21, 22) for guiding the work appliance (10),
a receiving cavity (11), realized in the handle housing (20), having an insertion opening (13) for a battery pack (12) for operating the electric motor (2),
wherein the battery pack (12) is held in an exchangeable manner in the receiving cavity (11),
and, for the purpose of vibration decoupling, the handle housing (20), together with the receiving cavity (11) for the battery pack (12), is decoupled from the appliance housing (1) by means of at least one and the same antivibration element (30),
and a vibration gap (9) is realized between the appliance housing (1) and the handle housing (20),
wherein the antivibration element (30) at least partly bridges the vibration gap (9) between the handle housing (20) and the appliance housing (1), **characterized in that** the handle housing (20) has a rear handle (21) that is distal from the work tool (3), and a front handle (22) that is proximal to the work tool (3).

2. Work appliance according to claim 1,
**characterized in that** the battery pack (12) is held rigidly in the receiving cavity (11).

3. Work appliance according to claim 2,
**characterized in that**, when the work appliance is in operation, no relative movements occur between the battery pack (12) and the receiving cavity (11).

4. Work appliance according to claim 2,
**characterized in that**, when the work appliance is in operation, no relative movements occur between the handle housing (20) and the contact strip (17) in the receiving cavity (11).

5. Work appliance according to claim 2,
**characterized in that**, when the work appliance is in operation, no relative movements occur between the handle housing (20) and the contacts (18) of the battery pack (12).

6. Work appliance according to claim 1,
**characterized in that**, when the work appliance is in operation, the battery pack (12), together with the handle housing (20), vibrates as a common mass system relative to the appliance housing (1).

7. Work appliance according to claim 1,
**characterized in that** the vibration decoupling of the battery pack (12) is effected by means of the antivibration element (30) of the handle (21, 22).

8. Work appliance according to claim 1,
**characterized in that** the receiving cavity (11) and at least one handle (21) form a common, fixedly connected handle housing (20).

9. Work appliance according to claim 1,
**characterized in that** the work appliance (10) has a longitudinal axis (6) and the longitudinal central axis (28) of the receiving cavity (11) is at an angle of 70° to 110° in relation to the longitudinal axis (6).

10. Work appliance according to claim 1,
**characterized in that** the work appliance (10) has a longitudinal axis (6) and the longitudinal central axis (28) of the receiving cavity (11) is in the longitudinal axis (6).

11. Work appliance according to claim 1,
**characterized in that** the battery pack (12) is held in the receiving cavity (11) by a separable snap-in latch (15).

12. Work appliance according to claim 1,
**characterized in that** the antivibration element (30) is an elastic moulded part (40, 41) and partially bridges the vibration gap (9).

13. Work appliance according to claim 1,
**characterized in that** the antivibration element (30) is a spring.

14. Work appliance according to claim 1,
**characterized in that** the work appliance (10) has a front end (101) and a rear end (102), **in that** the work tool (3) is arranged at the front end (101), and the insertion opening (13) is open toward the rear end (102) of the work appliance (10).

15. Work appliance according to claim 1,
**characterized in that** energy is supplied to the electric motor (2) via electric leads (19a, 19b), **in that** the electric leads (19a, 19b) are run as individual leads, and **in that** the electrical leads (19a, 19b), spaced at a distance (a) from each other, bridge the vibration gap (9) at differing locations (70, 71) of the vibration gap (9).

## Revendications

1. Appareil de travail électrique comportant :
un boîtier d'appareil (1) doté d'un moteur électrique (2) servant à l'entraînement d'un outil (3),
une unité de commande (24) servant à la mise en marche du moteur électrique (2),
un boîtier à poignées (20) comportant au moins une poignée (21, 22) servant au guidage de l'appareil de travail (10),
une cavité de réception (11) réalisée dans le boîtier à poignées (20) et dotée d'une ouverture d'insertion (13) pour un bloc-batterie (12) servant au fonctionnement du moteur électrique (2),
le bloc-batterie (12) étant retenu de manière remplaçable dans la cavité de réception (11),
et le boîtier à poignées (20) conjointement avec la cavité de réception (11) pour le bloc-batterie (12) étant découplé du boîtier d'appareil (1) par le biais d'au moins un même élément antivibrations (30) pour le découplage des vibrations,
et un interstice de vibrations (9) étant réalisé entre le boîtier d'appareil (1) et le boîtier à poignées (20),
l'élément antivibrations (30) enjambant au moins partiellement l'interstice de vibrations (9) entre le boîtier à poignées (20) et le boîtier d'appareil (1), **caractérisé en ce que** le boîtier à poignées (20) comprend une poignée arrière (21) distale par rapport à l'outil (3) et une poignée avant (22) proximale par rapport à l'outil (3).

2. Appareil de travail selon la revendication 1,
**caractérisé en ce que** le bloc-batterie (12) est retenu de manière rigide dans la cavité de réception (11).

3. Appareil de travail selon la revendication 2,
**caractérisé en ce qu'**aucun mouvement relatif ne se produit lors du fonctionnement entre le bloc-batterie (12) et la cavité de réception (11).

4. Appareil de travail selon la revendication 2,
**caractérisé en ce qu'**aucun mouvement relatif ne se produit lors du fonctionnement entre le boîtier à poignées (20) et la barrette de contact (17) dans la cavité de réception (11).

5. Appareil de travail selon la revendication 2,
**caractérisé en ce qu'**aucun mouvement relatif ne se produit lors du fonctionnement entre le boîtier à poignées (20) et les contacts (18) du bloc-batterie (12).

6. Appareil de travail selon la revendication 1,
**caractérisé en ce que** lors du fonctionnement le bloc-batterie (12) vibre conjointement avec le boîtier à poignées (20) en tant que système de masses commun relativement au boîtier d'appareil (1).

7. Appareil de travail selon la revendication 1,
**caractérisé en ce que** le découplage de vibrations du bloc-batterie (12) s'effectue par le biais de l'élément antivibrations (30) de la poignée (21, 22).

8. Appareil de travail selon la revendication 1,
**caractérisé en ce que** la cavité de réception (11) et au moins une poignée (21) forment un boîtier à poignées (20) commun relié solidement.

9. Appareil de travail selon la revendication 1,
**caractérisé en ce que** l'appareil de travail (10) présente un axe longitudinal (6) et l'axe médian longitudinal (28) de la cavité de réception (11) est situé suivant un angle de 70° à 110° par rapport à l'axe longitudinal (6).

10. Appareil de travail selon la revendication 1,
**caractérisé en ce que** l'appareil de travail (10) comprend un axe longitudinal (6) et l'axe médian longitudinal (28) de la cavité de réception (11) est situé dans l'axe longitudinal (6).

11. Appareil de travail selon la revendication 1,
**caractérisé en ce que** le bloc-batterie (12) est retenu dans la cavité de réception (11) par le biais d'un verrouillage par encliquetage (15) libérable.

12. Appareil de travail selon la revendication 1,
**caractérisé en ce que** l'élément antivibrations (30) est une pièce moulée élastique (40, 41) et enjambe partiellement l'interstice de vibrations (9).

13. Appareil de travail selon la revendication 1,
**caractérisé en ce que** l'élément antivibrations (30) est un ressort.

14. Appareil de travail selon la revendication 1,
**caractérisé en ce que** l'appareil de travail (10) comprend une extrémité avant (101) et une extrémité arrière (102), **en ce que** l'outil (3) est disposé à l'extrémité avant (101) et l'ouverture d'insertion (13) est ouverte vers l'extrémité arrière (102) de l'appareil de travail (10).

15. Appareil de travail selon la revendication 1,
**caractérisé en ce que** le moteur électrique (2) est alimenté en énergie par le biais de lignes électriques (19a, 19b), **en ce que** les lignes électriques (19a, 19b) sont posées en tant que lignes individuelles et **en ce que** les lignes électriques (19a, 19b) enjambent l'interstice de vibrations (9) à une distance (a) les unes des autres en différents points (70, 71) de l'interstice de vibrations (9).
